# EUROPEAN PATENT SPECIFICATION

(11) **EP 1 745 897 B1**
(45) Date of publication and mention of the grant of the patent: **10.09.2008**
(21) Application number: 06112515.9
(22) Date of filing: 12.04.2006
(51) Int. Cl.: B26F 1/44, F01N 3/28

(54) **Punching die for manufacturing seal member and method for manufacturing seal member**
Stanzwerkzeug zur Herstellung von Dichtungselementen und Methode zum Herstellen von Dichtelementen
Matrice de poinçonnage pour la fabrication d'un joint d'étanchéité et procédé de fabrication d'un joint d'étanchéité

(30) Priority: 19.07.2005 JP 2005209136
(43) Date of publication of application: 24.01.2007
(60) Divisional application: 08002522.4
(73) Proprietor: IBIDEN CO., LTD., Gifu, Ogaki 503-8604 (JP)
(72) Inventor: Osumi, Shiro c/o IBIDEN CO., LTD. KINUURA PLANT, Takahama Aichi 441-1301 (JP)
(74) Representative: HOFFMANN EITLE

(56) References cited:
- EP-A- 0 765 993
- WO-A-99/25964
- US-B1- 6 412 379
- PATENT ABSTRACTS OF JAPAN vol. 2000, no. 17, 5 June 2001 (2001-06-05) & JP 01 115594 A (ISEL CO LTD), 8 May 1989 (1989-05-08)
- PATENT ABSTRACTS OF JAPAN vol. 1995, no. 07, 31 August 1995 (1995-08-31) & JP 07 102961 A (HONDA MOTOR CO LTD), 18 April 1995 (1995-04-18)

## Description

The present invention relates to a punching die used in the manufacture of a seal member that is wound around an exhaust gas purifier, and a method for manufacturing a seal member using a punching die.

In the prior art, an exhaust gas purification apparatus includes a filter member for trapping particulate matter (PM) suspended in the exhaust gas, a casing for accommodating the filter member, and a sheet-like seal member arranged between the filter member and the casing. The seal member is wound around the filter member, and the filter member around which the seal member is wound, is pressed into the casing (refer to JP-A-2001-316965).

The seal member is required to have the properties described below. First, the seal member must have high heat resistance to withstand high-temperature exhaust gas. Next, the seal member must prevent leakage of exhaust gas from between the filter member and the casing. Further, the seal member must prevent the filter member from falling out of the casing or from moving in the casing.

The seal member may be manufactured by processing a sheet of inorganic fibers having a predetermined shape in accordance with the size and shape of the filter member. The manufacturing processes for the seal member may include a punching process for cutting a rolled mat of inorganic fibers to a predetermined length. The punching enables a plurality of seal members to be simultaneously produced. There is a demand for further improving the productivity of seal members.

WO 99/25964 refers to use of die for cutting a single mounting article out of an intumescent or non-instumescent sheet material. The non-intumescent sheet materials include those made of from ceramic fibers. The die has a base and a cavity defined by a die perimeter.

JP 01115594 refers to a punching machine used in manufacturing punched products.

Wask material is formed between punched products US 6,412,379 B1 describes an automatic punching apparatus. It uses a punching step.

Portions on the cutting line of the twin sheet material are caused to remain circut to form uncut portions so as to prevent the wask portions from falling down from the punched product after the completion of the punching step.

The present invention relates to use of a punching die for punching out a seal member from a sheet of an inorganic fiber mat having a contour. The punching die includes a base plate. A first blade is supported on the base plate and has a cutting edge extending to form a loop. The first blade punches out a frame-shaped unnecessary portion, which includes the contour of the inorganic fiber mat, and a seal member formation portion, which includes the seal member, from the inorganic fiber mat. At least one second blade is supported on the base plate at an outer side of the first blade. The second blade punches and cuts the frame-shaped unnecessary portion into a plurality of unnecessary fragments.

In one embodiment, the second blade is arranged to be continuous with the first blade, and the second blade cuts the frame-shaped unnecessary portion into the plurality of unnecessary fragments at the same time as when the first blade punches the frame-shaped unnecessary portion out of the inorganic fiber mat.

In one embodiment, the at least one second blade includes a plurality of second blades that are spaced from one another to cut the frame-shaped unnecessary portion into the plurality of unnecessary fragments.

The punching die further includes at least one third blade, supported on the base plate at an inner side of the first blade, for punching and dividing the seal member formation portion into a plurality of seal members.

The first blade, the at least one second blade, and the at least one third blade divide the inorganic fiber mat into the seal members and the plurality of unnecessary fragments with one punch.

In one embodiment, each blade is made of carbon steel

The disclosure relates to a method for manufacturing a seal member from a sheet of an inorganic fiber mat having a contour. The method includes punching the inorganic fiber mat with a punching die. The punching die includes a base plate. A first blade is supported on the base plate and has a cutting edge extending to form a loop. The first blade punches out a frame-shaped unnecessary portion, which includes the contour of the inorganic fiber mat, and a seal member formation portion, which includes the seal member, from the inorganic fiber mat. At least one second blade is supported on the base plate at an outer side of the first blade. The second blade punches and cuts the frame-shaped unnecessary portion into a plurality of unnecessary fragments.

The punching includes dividing the inorganic fiber mat into the seal members and the plurality of unnecessary fragments with one punch.

In one embodiment, the method further includes separating the plurality of unnecessary fragments from the seal member formation portion without causing a burr on a cut surface of the seal member formation portion.

Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:
Fig. 1A is a plan view of a punching die according to a preferred embodiment of the present invention;
Fig. 1B is an enlarged view showing a corner of the punching die of Fig. 1A;
Fig. 2 is a partial cross-sectional view of the punching die taken along line 2-2 of Fig. 1A;
Figs. 3A and 3B are cross-sectional views showing how an inorganic fiber mat is punched with the punching die of Fig. 1A;
Fig. 4 is a plan view showing seal members and unnecessary fragments that are punched out with the punching die of Fig. 1A;
Fig. 5A is a perspective view showing a seal member;
Fig. 5B is a perspective view showing a seal member that is wound around an exhaust gas purifier and a casing for accommodating the exhaust gas purifier;
Fig. 6 is a cross-sectional view of an exhaust gas purification apparatus;
Fig. 7A is a plan view showing a modification of a punching die according to the present invention;
Fig. 7B is a partially enlarged view showing the punching die of Fig. 7A; and
Fig. 8 is a plan view showing seal members and unnecessary fragments that are punched out using the punching die of Fig. 7A

A punching die 11 used according to an embodiment of the present invention will now be described.

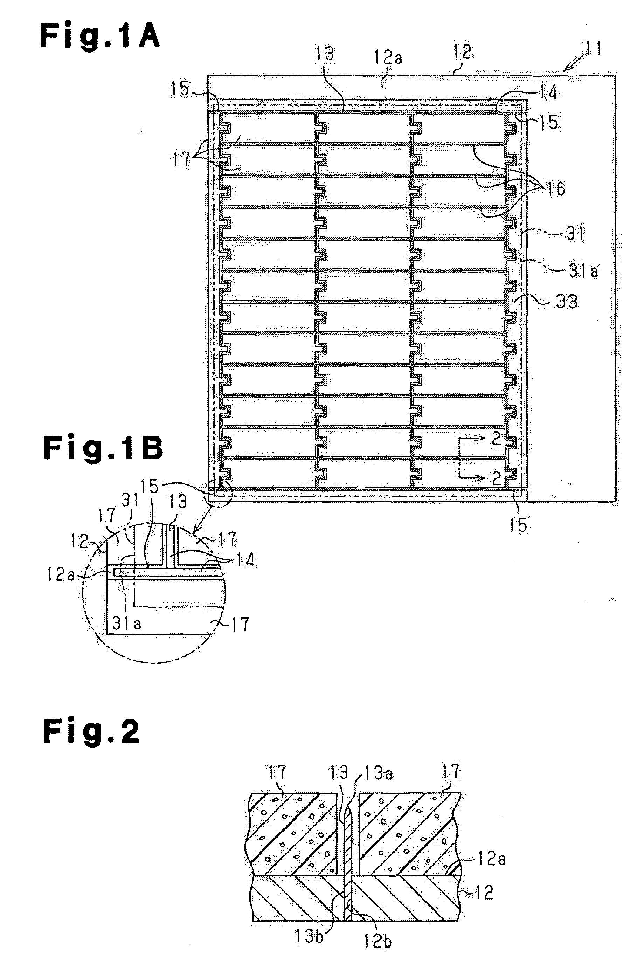

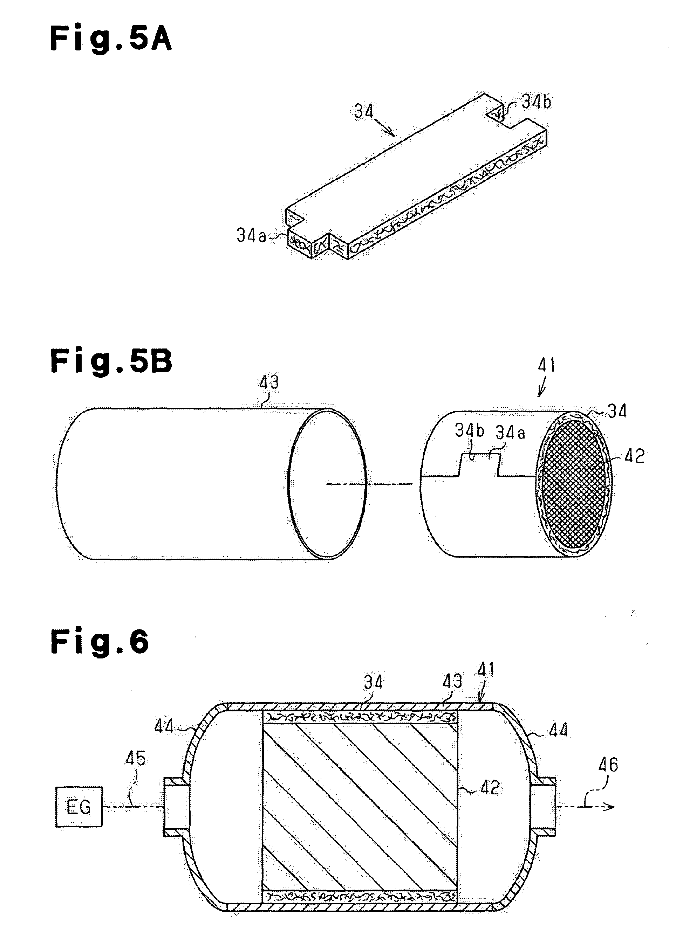

As shown in Fig. 1A, the punching die 11 includes a base plate 12 and a plurality of blades 13 that are supported on the base plate 12. The punching die 11 is used to punch a sheet of an inorganic fiber mat 31 and cut out a seal member 34 from the inorganic fiber mat 31. The seal member 34 is wound around a filter member 42, which functions as an exhaust gas purifier (Fig. 5B). The punching die 11 of the preferred embodiment punches out a plurality of seal members 34 from the inorganic fiber mat 31..

The base plate 12 has a flat processing surface 12a. The processing surface 12a is rectangular and is larger than the inorganic fiber mat 31, which is rectangular. The base plate 12 may be made of any material but is preferably made of wood or plywood, which are easy to manufacture and have relatively high strengths.

The blades 13 include a first blade 14, at least one second blade 15, and at least one third blade 16. The first blade 14 has a cutting edge that projects from the processing surface 12a of the base plate 12 and extends in a loop or a rectangular circuit. The second blades 15 are arranged on the processing surface 12a at the outer side the first blade 14. The third blades 16 are arranged on the processing surface 12a at the inner side the first blade 14.

The cutting edge of the first blade 14 extends in the shape of a rectangular loop. The first blade 14 punches the inorganic fiber mat 31 to separate a frame-shaped unnecessary portion 33, which is the part of the inorganic fiber mat 31 including an outer end (contour) 31a of the inorganic fiber mat 31, and a seal member formation portion 32, which is the part of the inorganic fiber mat 31 excluding the frame-shaped unnecessary portion 33. The punching with the first blade 14 forms the end surfaces of the seal member formation portion 32 and shapes the seal member formation portion 32.

The second blades 15 cut the frame-shaped unnecessary portion 33. The second blades 15 are continuously connected to the first blade 14 so that there is no gap between the second blades 15 and the first blade 14.

In the preferred embodiment, the first blade 14 forms a rectangular loop having four corners. Four second blades 15, which are spaced from one another, respectively extend outward from the four corners of the first blade 14. The first blade 14 separates the frame-shaped unnecessary portion 33 and the seal member formation portion 32. The seal member formation portion 32 is generally rectangular and is surrounded by the frame-shaped unnecessary portion 33. The four second blades 15 divide the frame-shaped unnecessary portion 33 into four thin unnecessary fragments (strips) 33a by cutting the four corners of the frame-shaped unnecessary portion 33.

The third blades 16 are arranged at the inner side of the first blade 14. The third blades 16 punch the seal member formation portion 32 and divide the seal member formation portion 32 into a plurality of seal members 34. In the preferred embodiment, the plurality of third blades 16 are arranged in a grid. With such third-blades 16, a single punching operation enables the plurality of seal members 34 to be cut out of the single inorganic fiber mat 31.

As shown in Fig. 2, the base plate 12 includes mounting grooves 12b. The mounting grooves 12b are formed in the processing surface 12a, for example, through laser processing. Basal portions 13b of the blades 13 (14, 15, and 16) are pressed into the mounting grooves 12b so that the cutting edges 13a of the blades 13 project from the processing surface 12a. The blades 13 are supported on the base plate 12 in this manner. The cutting edges 13a of the blades 13 are aligned at a predetermined height from the processing surface 12a.

The blades 13 are fixed to the base plate 12 in a predetermined arrangement. Each blade 13 may be formed by bending a single thin and elongated blade in a predetermined manner and fixing the blade to the base plate 12. Alternatively, the blades 13 may be formed by arranging a plurality of blade pieces adjacent to one another in a continuous manner and fixing the blade pieces to the base plate 12. The blades 13 may be formed, for example, from a metal material or a ceramic material. In the preferred embodiment, the blades 13 are made of carbon steel, which easily bends. Each blade 13 may be single edged or double edged. In the example of Fig. 2, the blade 13 is double edged. It is preferable that the blade 13 be double edged to reduce resistance when punching the inorganic fiber mat 31. Although not limited, the blade 13 has a thickness in the range of about 0.5 to about 1.5 mm. In the preferred embodiment, the blade 13 has a thickness of approximately 1 mm.

As shown in Figs. 1 and 2, a foam layer 17 is fixed on the processing surface 12a in an area defined by the first blade 14 and the third blades 16 and an area outside the first blade 14.

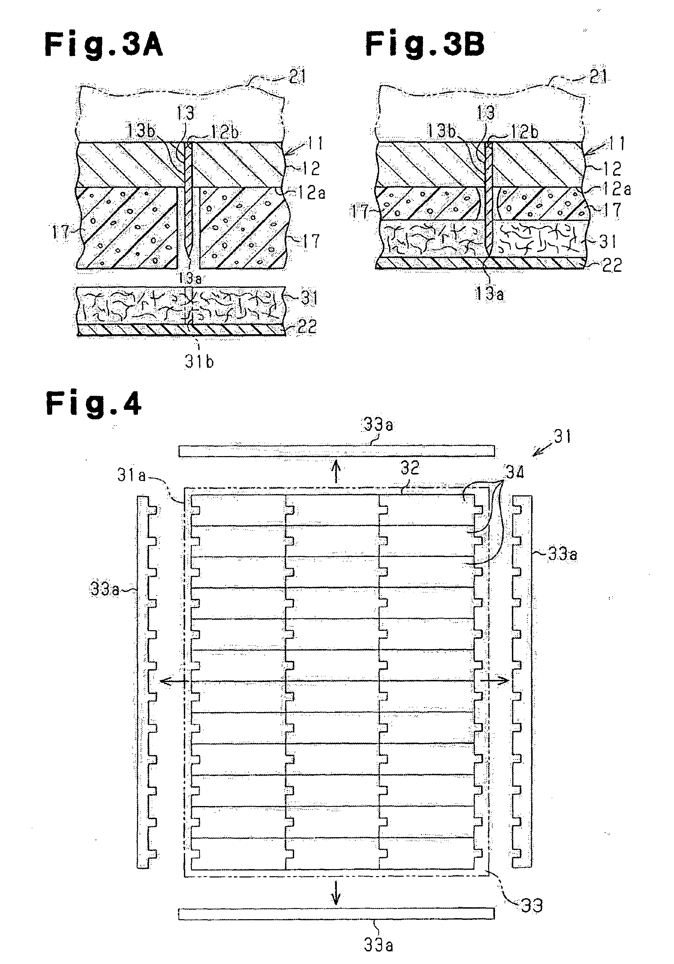

The operation of the foam layer 17 will now be described. As shown in Fig. 3A, the punching die 11 is set in a press 21 with the processing surface 12a facing downwards. The inorganic fiber mat 31 is placed on a conveyer or a processing plate 22 arranged below the punching die 11. When the press 21 is driven, the blades 13 penetrate the surface of the inorganic fiber mat 31 at a right angle and are moved downward until their cutting edges come into contact with the processing plate 22. As a result, the blades 13 cut the inorganic fiber mat 31. Referring to Fig. 3B, the pressure applied by the press 21 compresses and deforms the foam layer 17. The repulsive force of the foam layer 17 acts on the inorganic fiber mat 31. When the press 21 moves upward, the repulsive force of the foam layer 17 downwardly presses the inorganic fiber mat 31. As a result, the cutting edges 13a are removed from the punched inorganic fiber mat 31. Fig. 3A shows a cut surface 31b of the punched inorganic fiber mat 31. The foam layer 17 separates the punched inorganic fiber mat 31 from the punching die 11. In this state, the punched inorganic fiber mat 31 is conveyed to a workbench.

It is preferable that a gap be formed between the foam layer 17 and the blades 13. The gap reduces friction resistance between the inorganic fiber mat 31 and the blades 13 when the foam layer 17 presses the inorganic fiber mat 31. It is preferable that the gap between the foam layer 17 and the blades 13 be about 10 mm or less. When the gap is about 10 mm or less, the inorganic fiber mat 31 does not get caught between the foam layer 17 and the blades 13. This prevents deformed seal members from being manufactured.

The foam layer 17 is manufactured from an elastic material that produces sufficient repulsive force for removing the cutting edges 13a from the inorganic fiber mat 31. The preferred material for the foam layer 17 is synthetic rubber since this material maintains repulsive force (the foam layer 17 does not become flat) even after repetitive use of the punching die 11.

Referring to Fig. 3A, in a state in which the foam layer 17 is not compressed, it is preferred that the thickness of the foam layer 17 be greater than the height of the cutting edges 13a from the processing surface 12a. In this case, the foam layer 17 presses the inorganic fiber mat 31 to a location below the cutting edges 13a so that the inorganic fiber mat 31 is easily separated from the punching die 11. The foam layer 17 is fixed to the processing surface 12a by a double-sided tape or an adhesive.

Preferable materials for the inorganic fiber mat 31 include inorganic fibers, such as silica fibers, alumina fibers, and silica-alumina fibers. The inorganic fiber mat 31 is obtained by forming a sheet of inorganic fibers. The inorganic fiber mat 31 may be obtained by cutting a rolled mat of inorganic fibers to a predetermined length. The thickness of the inorganic fiber mat 31 may be, for example, about 5 to about 10 mm. It is preferred that the inorganic fiber mat 31 be needle-punched. A seal member 34 cut out of a needle-punched inorganic fiber mat 31 has a reduced thickness and exhibits satisfactory seal performance. The inorganic fiber mat 31 may be impregnated with a binder resin so that a seal member 34 would have reduced thickness and exhibit satisfactory seal performance. Further, the binder resin prevents inorganic fibers from falling off from the inorganic fiber mat 31 or from the seal member 34.

As shown in Fig. 4, the inorganic fiber mat 31 is punched by the first blade 14 and divided into the seal member formation portion 32 and the frame-shaped unnecessary portion 33. The seal member formation portion 32 is punched by the third blades 16 and divided into the seal members 34. The frame-shaped unnecessary portion 33 is divided into the four unnecessary fragments 33a by the second blades 15. The four unnecessary fragments 33a can easily be removed by moving them aside from the seal member formation portion 32 on the workbench. The removed unnecessary fragments 33a are then collected.

After the unnecessary fragments 33a are removed, only the seal members 34 remain on the workbench. Thus, the seal members 34 can be readily collected. The collected seal members 34 are placed in a transportation container and transported for assembly of an exhaust gas purification apparatus.

Fig. 5A shows one example of a seal member 34. The seal member 34 is generally rectangular and includes a tab 34a and a recess or socket 34b. When the seal member 34 is wound around an exhaust gas purifier, the tab 34a is fitted in the socket 34b.

An exhaust gas purification apparatus 41 will now be described with reference to Fig. 5B. The exhaust gas purification apparatus 41 includes a filter member 42, which functions as an exhaust gas purifier, a casing 43, and a seal member 34. The seal member 34 is arranged between the filter member 42 and the casing 43, which accommodates the filter member 42. In one example, the filter member 42 is a cylindrical honeycomb structure having a large number of cells. When the exhaust gas passes through the filter member 42, the particulate matter suspended in the exhaust gas is trapped by the inner walls of the cells. The filter member 42 may be made of a ceramic, such as silicon carbide, silicon nitride, cordierite, or mullite. The filter member 42 may be a catalyst carrier for carrying a catalyst.

The casing 43 is a cylinder having an inner diameter slightly larger than the outer diameter of the filter member 42. In one example, the casing 43 is made of metal.

The assembly of the exhaust gas purification apparatus 41 will now be described. First, the seal member 34 is wound around the filter member 42. The tab 34a is fitted into the socket 34b. Thus, the seal member 34 is wound around the entire circumference of the filter member 42 without its ends overlapping each other.

The filter member 42 around which the seal member 34 is wound is pressed into the casing 43. The seal member 34 is elastically compressed. The repulsive force of the seal member 34 retains the filter member 42 in the casing 43. The seal member 34 functions as a protective cushion for preventing the filter member 42 from hitting the casing 43 due to vibrations transmitted from the outer side.

As shown in Fig. 6, a coupler 44 is connected to each of the two open ends of the casing 43 in the exhaust gas purification apparatus 41, for example, through welding. The coupler 44 on one end of the casing 43 is connected to a first exhaust pipe 45, which is further connected to a vehicle engine. The coupler 44 on the other end of the casing 43 is connected to a second exhaust pipe 46, which is further connected to a muffler (not shown). Exhaust gas of the engine is emitted through the exhaust gas purification apparatus 41.
The seal member 34 seals the gap between the outer circumferential surface of the filter member 42 and the inner circumferential surface of the casing 43 to prevent exhaust gas from leaking out from between the outer circumferential surface of the filter member 42 and the inner circumferential surface of the casing 43.

The preferred embodiment has the advantages described below.
(1) The frame-shaped unnecessary portion 33 is divided into the plurality of unnecessary fragments 33b by the second blades 15. The unnecessary fragments 33a may be removed from the seal members 34 by lifting and moving away the ends of the unnecessary fragments 33a. The unnecessary fragments 33a are not likely to cling to the seal members 34. This improves operation efficiency for removing the unnecessary portion 33 from the seal member formation portion 32.
(2) The second blades 15 are continuous with the first blade 14. Thus, a single punching operation with the punching die 11 not only enables the seal members 34 to be punched out but also enables the frame-shaped unnecessary portion 33 to be divided into the plurality of unnecessary fragments 33a. This eliminates the need for separate operations to pull off and remove the frame-shaped unnecessary portion 33 from the seal member formation portion 32 or to cut off the frame-shaped unnecessary portion 33 through another punching process. This improves operation efficiency for removing the unnecessary portion 33 from the seal member formation portion 32.
(3) The second blades 15 spaced from one another divide the frame-shaped unnecessary portion 33 into the relatively small unnecessary fragments 33a. The relatively small unnecessary fragments 33a are not likely to cling to the seal members 34. This improves operation efficiency for removing the unnecessary portion 33 from the seal member formation portion 32.
(4) The cutting edge of the first blade 14, which extends in the shape of a rectangular loop, cuts out the rectangular frame-shaped unnecessary portion 33. The cutting edges of the second blades 15 extend outward from the corners of the first blade 14 and cut the rectangular frame-shaped unnecessary portion 33 into the thin unnecessary fragments 33a. The unnecessary portion 33 is easily removed from the seal member formation portion 32 by pulling away the unnecessary fragments 33a from the seal member formation portion 32. The rectangular frame-shaped unnecessary portion 33 is separated into the linear unnecessary fragments 33a. Thus, arrangement of the removed unnecessary fragments 33a in a parallel state at a temporary collection spot reduces space occupied by the removed unnecessary fragments 33a.
(5)The third blades 16 that cut the seal member formation portion 32 into the plurality of seal members 34 are arranged at the inner side the first blade 14. A single punching operation forms the seal members 34 from the single inorganic fiber mat 31. This improves operation efficiency for removing the unnecessary portion 33 and increases the productivity of the seal members 34.
(6) The punching die 11 manufactures the seal members 34 from the inorganic fiber mat 31 with high productivity.
(7) When the inorganic fiber mat 31 is cut out of a rolled inorganic fiber mat or a long inorganic fiber mat, the end surfaces of the roll or the cut surfaces of the long inorganic fiber mat become the outer end 31a of the inorganic fiber mat 31. In this case, the outer end 31a of the inorganic fiber mat 31 may have an uneven thickness. Accordingly, the first blade 14 punches out the frame-shaped unnecessary portion 33 including the outer end 31a of the inorganic fiber mat 31 as the unnecessary fragments 33a. In this manner, the first blade 14 shapes the inorganic fiber mat 31.

The frame-shaped unnecessary portion may cling to the end surfaces of seal members when the frame-shaped unnecessary portion is removed. In such a case, the end surfaces of the seal members may have burrs. However, the second blades 15 cut the frame-shaped unnecessary portion 33 into the unnecessary fragments 33a. Thus, the cut surfaces of the seal member formation portion 32 (end surfaces of the seal members 34)will not have burrs when the unnecessary fragments 33a are separated from the seal member formation portion 32. This results in the seal members 34 with high-quality, uniform thickness, and uniform shape.

It should be apparent to those skilled in the art that the present invention may be embodied in many other specific forms without departing from the scope of the claims . Particularly, it should be understood that the present invention may be embodied in the following forms.

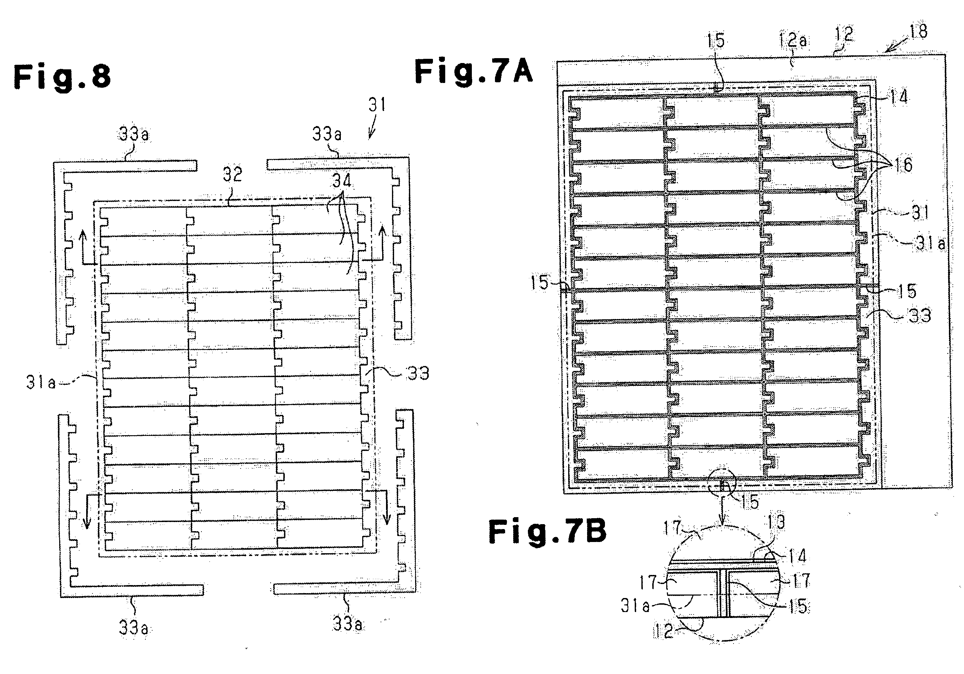

The positions of the second blades 15 may be changed. As shown in Figs. 7A and 7B, a punching die 18 may include a plurality of second blades 15, which extend outward from the rectangular loop-shaped first blade 14 at locations other than the four corners. As shown in Fig. 8, an unnecessary portion 33 of an inorganic fiber mat 31, which is punched using the punching die 18, is separated into four L-shaped unnecessary fragments 33a.

The second blades 15 are arranged to be continuous with the first blade 14 to cut across the entire width of the frame-shaped unnecessary portion 33. However, the structure of the second blades 15 may be changed in the following manner. The second blades 15 may be spaced from the first blade 14. Alternatively, the second blades 15 may be arranged continuously with the first blade 14 but may be formed so that the outer end of the unnecessary portion 33 remains uncut. In such a case, the second blades 15 punch out the unnecessary portion 33 partially leaving the part between the outside and inside of the frame connected. In such a case, the unnecessary portion 33 may be separated, for example, by manually tearing the part that has been punched out with the second blades 15. This separates the frame-shaped unnecessary portion 33 into a plurality of unnecessary fragments 33a. The unnecessary fragments 33a are easily removed from the seal member 34 by lifting the ends of the unnecessary fragments 33a.

The first blade 14 may be arranged to form a closed loop other than a rectangular loop. For example, the first blade 14 may be arranged to form a hexagonal loop. However, when the inorganic fiber mat 31 is rectangular, the number of seal members 34 cut out of the inorganic fiber mat 31 can be maximized, and the unnecessary portion 33 may be minimized. Accordingly, it is preferred that the first blade 14 be arranged to form a rectangular loop.

The inorganic fiber mat 31 does not have to be rectangular and may have other shapes. For example, the inorganic fiber mat 31 may be hexagonal.

The base plate 12 does not have to be rectangular and may have any other shape in accordance with the shape of the inorganic fiber mat 31. For example, the base plate 12 may be hexagonal.

The quantity of the second blades 15 may be only one. Alternatively, the quantity of the second blades 15 may be three or less or five or more.

The size and the shape of the seal member 34 differ depending on the size and the shape of the filter member 42. Thus, the arrangement of the third blades 16 may be changed in accordance with the size and shape of the filter member 42.

The seal member 34 does not have to include the tab 34a and the socket 34b.

The punching die 11 and 18 do not have to include the foam layer 17.

The present examples and embodiments are to be considered as illustrative and not restrictive, and the invention is not to be limited to the details given herein,

## Claims

1. Use of a punching die (11; 18) for punching out seal members (34) from a sheet of an inorganic fiber mat (31) having a contour (31a), the punching die having:
a first blade (14) supported on a base plate (12) and having a cutting edge (13a) extending to form a loop,
wherein the first blade punches out a frame-shaped unnecessary portion (33), which includes the contour of the inorganic fiber mat, and a seal member formation portion (32), which includes the seal member, from the inorganic fiber mat;
wherein the use is further **characterized in that** the punching die has:
at least one second blade (15) supported on the base plate at an outer side of the first blade, wherein the second blade punches and cuts the frame-shaped unnecessary portion into a plurality of unnecessary fragments (33a);and
at least one third blade (16), supported on the base plate at an inner side of the first blade, for punching and dividing the seal member formation portion (32) into a plurality of seal members (34),
wherein the first blade, the at least one second blade, and the at least one third blade divide the inorganic fiber mat into the seal members and the plurality of unnecessary fragments with one punch.

2. Use according to claim 1, wherein the at least one second blade includes a plurality of second blades that are spaced from one another to cut the frame-shaped unnecessary portion into the plurality of unnecessary fragments.

3. Use according to claim 2, wherein the first blade has a cutting edge that extends to form a rectangular loop having four corners, and the at least one second blade includes four second blades respectively extending outward from the four corners of the first blade.

4. Use according to any one of claims 1 to 3, wherein each blade is made of carbon steel.

## Patentansprüche

1. Verwendung eines Stanzwerkzeugs (11; 18) zum Ausstanzen von Dichtungselementen (34) aus einem Bogen einer Matte aus anorganischen Fasern (31), die eine Kontur (31a) aufweist,
wobei das Stanzwerkzeug aufweist:
eine erste Klinge (14), die auf einer Basisplatte (12) unterstützt ist und eine Schneidkante (13a) aufweist, die sich erstreckt, um eine Schlaufe auszubilden, wobei die erste Klinge einen rahmenförmigen überflüssigen Abschnitt (33), welcher die Kontur der Matte aus anorganischen Fasern enthält, und einen Dichtungselement-Ausbildungsabschnitt (32), der das Dichtungselement enthält, aus der Fasermatte aus anorganischen Fasern ausstanzt;
wobei die Verwendung ferner **dadurch gekennzeichnet ist, dass** das Stanzwerkzeug aufweist:
wenigstens eine zweite Klinge (15), die auf der Basisplatte unterstützt ist, an einer äußeren Seite der ersten Klinge, wobei die zweite Klinge den rahmenförmigen überflüssigen Abschnitt in eine Vielzahl von überflüssigen Fragmenten (33a) stanzt und schneidet; und
wenigstens eine dritte Klinge (16), die auf der Basisplatte an einer Innenseite der ersten Klinge unterstützt ist, zum Stanzen und Trennen des Dichtungselement-Ausbildungsabschnitts (32) in eine Vielzahl von Dichtungselementen (34),
wobei die erste Klinge, die wenigstens eine zweite Klinge und die wenigstens eine dritte Klinge die Fasermatte aus anorganischen Fasern in die Dichtungselemente und die Vielzahl von überflüssigen Fragmenten mit einem Stanzvorgang trennt.

2. Verwendung nach Anspruch 1, bei der die wenigstens eine zweite Klinge eine Vielzahl von zweiten Klingen enthält, die voneinander beabstandet sind, um den rahmenförmigen überflüssigen Abschnitt in die Vielzahl von überflüssigen Fragmenten zu schneiden.

3. Verwendung nach Anspruch 2, bei der die erste Klinge eine Schneidkante aufweist, die sich erstreckt, um eine rechteckförmige Schlaufe, die vier Ecken aufweist, auszubilden, und die wenigstens eine zweite Klinge vier zweite Klingen enthält, die sich jeweils von den vier Ecken der ersten Klinge nach außen erstrecken.

4. Verwendung nach einem der Ansprüche 1 bis 3, bei der jede Klinge aus Kohlenstoffstahl gefertigt ist.

## Revendications

1. Utilisation d'une matrice de poinçonnage (11 ; 18) pour poinçonner des joints d'étanchéité (34) à partir d'une feuille d'un mat de fibres non organiques (31) ayant un contour (31a), la matrice de poinçonnage ayant :
un première lame (14) supportée sur une plaque de base (12) et ayant un bord coupant (13a) qui s'étend de manière à former une boucle, dans laquelle la première lame poinçonne une partie inutile en forme de cadre (33), qui inclut le contour du mat de fibres non organiques, et une partie de formation d'élément d'étanchéité (32), qui inclut l'élément d'étanchéité, à partir du mat de fibres non organiques ;
la dite utilisation étant en outre **caractérisée en ce que** la matrice de poinçonnage comprend :
au moins une deuxième lame (15) supportée sur la plaque de base d'un côté extérieur de la première lame, de sorte que la deuxième lame poinçonne et coupe la partie inutile en forme de cadre en une pluralité de fragments inutiles (33a) ;
au moins une troisième lame (16), supportée sur la plaque de base d'un côté intérieur de la première lame, pour poinçonner et diviser la partie de formation d'élément d'étanchéité (32) en une pluralité de joints d'étanchéité (34),
dans laquelle la première lame, la dite au moins une deuxième lame, et la dite au moins une troisième lame divisent le mat de fibres non organiques en les joints d'étanchéité et en la pluralité de fragments inutiles avec un seul poinçon.

2. Utilisation selon la revendication 1, dans laquelle la dite au moins une deuxième lame comprend une pluralité de deuxièmes lames qui sont espacées les unes des autres pour couper la partie inutile en forme de cadre en la pluralité de fragments inutiles.

3. Utilisation selon la revendication 2, dans laquelle la première lame comporte un bord coupant qui s'étend de manière à former une boucle rectangulaire ayant quatre angles, et la dite au moins une deuxième lame comprend quatre deuxièmes lames s'étendant respectivement vers l'extérieur à partir des quatre angles de la première lame.

4. Utilisation selon une quelconque des revendications 1 à 3, dans laquelle chaque lame est fabriquée en acier au carbone.
